# EUROPÄISCHE PATENTSCHRIFT

(11) **EP 3 320 967 B1**
(45) Veröffentlichungstag und Bekanntmachung des Hinweises auf die Patenterteilung: **08.04.2020**
(21) Anmeldenummer: 17198537.7
(22) Anmeldetag: 26.10.2017
(51) Int. Cl.: B01J 19/26, B01J 4/00, C01B 21/28

(54) **EINRICHTUNG UND VERFAHREN ZUR VERHINDERUNG DER KORROSION AN EINEM GASEINTRITTSSTUTZEN BEI EINER SALPETERSÄUREKONDENSATION**
DEVICE AND METHOD FOR PREVENTING CORROSION ON A GAS INLET NOZZLE IN THE CASE OF NITRIC ACID CONDENSATION
PROCÉDÉ ET DISPOSITIF POUR EMPÊCHER LA CORROSION D'UNE TUBULURE D'ENTRÉE DE GAZ LORS D'UNE CONDENSATION D'ACIDE NITRIQUE

(30) Priorität: 09.11.2016 DE 102016221935
(43) Veröffentlichungstag der Anmeldung: 16.05.2018
(73) Patentinhaber: thyssenkrupp Industrial Solutions AG, 45143 Essen (DE); thyssenkrupp AG, 45143 Essen (DE)
(72) Erfinder: Dragon, Adalbert, 58453 Witten (DE)
(74) Vertreter: thyssenkrupp Intellectual Property GmbH

(56) Entgegenhaltungen:
- WO-A1-2014/067958
- DE-B3-102007 006 889
- US-A- 5 441 082

## Beschreibung

Die vorliegende Erfindung betrifft eine Einrichtung zur Verhinderung der Korrosion an einem Gaseintrittsstutzen für Prozessgas (NOₓ-Gas) im Übergangsbereich zum Inneren eines Kondensators einer Salpetersäureanlage, wobei der Gaseintrittsstutzen auf der Innenseite eine Hülse aufweist, durch die eine Gaseintrittsöffnung in Form eines Ringspalts ausgebildet wird, wobei der Ringspalt mit wenigstens einer Einspeiseöffnung und wenigstens einem in diese Einspeiseöffnung mündenden Einspeisestutzen für Sekundärluft versehen ist, so dass sich eine Mantelströmung aus Sekundärluft um das durch den Gaseintrittsstutzen eintretende Prozessgas bildet. Gegenstand der vorliegenden Erfindung ist weiterhin ein Verfahren zur Verhinderung der Korrosion an einem Gaseintrittsstutzen für Prozessgas (NOₓ-Gas) im Übergangsbereich zum Inneren eines Kondensators einer Salpetersäureanlage.

Bei der Herstellung von Salpetersäure nach dem Ostwald-Verfahren wird durch die Oxidation von Ammoniak in Luft-Sauerstoff oder in speziellen Fällen in anderen sauerstoffhaltigen Gemischen wie beispielsweise Wasserdampf und Sauerstoff oder mit Sauerstoff angereicherter Luft ein Gasgemisch gebildet, das Stickoxide, Wasserdampf, Sauerstoff und andere, an den Folgereaktionen nicht beteiligte Stoffe, enthält. Die Stickoxide, die für das aktuelle Problem relevant sind, sind Stickstoffmonoxid (NO), Stickstoffdioxid (NO₂), Distickstoffoxid (N₂O), Distickstofftetroxid (N₂O₄) und Distickstofftrioxid (N₂O₃), die unter den entsprechenden Bedingungen bei Reaktion mit Wasser und ggf. Sauerstoff entstehen, wobei diese wässrige Lösungen von Salpetersäure (HNO₃) und salpetriger Säure bilden. Das bei der Ammoniakoxidation gebildete Gasgemisch ist zunächst heiß- typischerweise im Bereich von etwa 900 °C - und wird in der Anlage durch Wärmeaustausch mit anderen Stoffströmen in geeigneten Apparaten abgekühlt. Außer der Wärmerückgewinnung ist ein weiteres Ziel der Abkühlung, eine wässrige, salpetersäurehaltige Lösung zu erhalten, die dann in weiteren Schritten auf die gewünschte Endkonzentration der Produktsäure aufkonzentriert wird.

In der Salpetersäureanlage strömt das heiße Prozessgas von einem so genannten "Economizer" (Speisewasservorwärmer) zu einem Kühler und Kondensator. Wenn dieses Prozessgas an der Wand des Eintrittsstutzens eines Kühlers und Kondensators abgekühlt wird, kann die Siedetemperatur von NOₓ (beispielsweise ca. 130 °C) unterschritten werden und es kommt zur Auskondensation von Salpetersäure. Diese Salpetersäure führt zu Korrosion an dem genannten Eintrittsstutzen.

Um diesen Effekt zu verhindern, wurde eine entsprechende Einrichtung entwickelt, die in der EP 2 121 177 B1 beschrieben ist. Diese Druckschrift beschreibt ein Verfahren und eine Einrichtung zur Verhinderung der Korrosion an einem Gaseintrittsstutzen bei einer Salpetersäurekondensation, bei dem der Gaseintrittsstutzen im Übergangsbereich zum Inneren des Kondensators auf der Innenseite eine Hülse aufweist, durch die eine Gaseintrittsöffnung in Form eines Ringspalts ausgebildet wird, wobei der Ringraum mit wenigstens einer Einspeiseöffnung für Sekundärluft versehen ist, so dass sich eine Mantelströmung aus Sekundärluft um das eintretende NOₓ-Gas bildet. Die in den Eintrittsstutzen eingeschweißte Hülse erzeugt somit einen Ringraum zwischen dem Eintrittsstutzen und dieser Hülse. In diesen Ringraum wird heiße Luft eingeblasen, um die Wandtemperatur der Hülse oberhalb der Siedebedingungen des Prozessgases zu halten.

Die praktischen Erfahrungen mit der aus der vorgenannten Druckschrift bekannten Einrichtung haben gezeigt, dass es dennoch zu Korrosion an der Hülse kommen kann, wenn diese beispielsweise bei den Prozessbedingungen unzureichend gekühlt wird.

Bei der in der EP 2 121 177 B1 beschriebenen Einrichtung tritt die Sekundärluft aus einer Ringleitung kommend über einen Einspeisestutzen in den spaltartigen Ringraum ein, wobei dieser Einspeisestutzen radial und somit etwa senkrecht zur Achse des Gaseintrittsstutzens des Prozessgases und zur Achse der Hülse ausgerichtet ist. Somit erfährt die Sekundärluft beim Übergang aus dem Einspeisestutzen in den Ringraum eine Umlenkung um etwa 90 °.Dies führt zu nicht gleichmäßigen Strömungsverhältnissen im Ringraum und kann zu einer unerwünschten partiellen Rückströmung des Prozessgases in den Ringraum führen. Zudem wird bei dieser bekannten Lösung eine, bezogen auf die Achse des Gaseintrittsstutzens und des Ringspalts, etwa axiale Mantelströmung der Luft im Ringspalt erzeugt.

Die Aufgabe der vorliegenden Erfindung besteht darin, eine Einrichtung zur Verhinderung der Korrosion an einem Gaseintrittsstutzen bei einer Salpetersäurekondensation mit den Merkmalen der eingangs genannten Gattung zur Verfügung zu stellen, bei der eine Kondensation und ein Sieden des Prozessgases an der Hülse sicher vermieden werden und somit die Korrosion verhindert wird.

Die Lösung der vorgenannten Aufgabe liefert eine Einrichtung zur Verhinderung der Korrosion an einem Gaseintrittsstutzen bei einer Salpetersäurekondensation der eingangs genannten Art mit den Merkmalen des Anspruchs 1.

Erfindungsgemäß ist vorgesehen, dass der wenigstens eine Einspeisestutzen für Sekundärluft in einem von 90 ° abweichenden Winkel zur Achse des Ringspalts ausgerichtet ist. Strömungstechnisch ist dies günstiger als bei der bekannten Lösung, bei der der Einspeisestutzen etwa rechtwinklig zur Achse des Ringspalts ausgerichtet ist und nach dem Eintritt der Luft deren Umlenkung um etwa 90 ° erfolgt, woraus eine axiale Mantelströmung in dem Ringspalt resultiert.

Der wenigstens eine Einspeisestutzen ist tangential bezogen auf den Ringspalt und den Gaseintrittsstutzen ausgerichtet, d.h. in etwa parallel zur Achse des Ringspalts. Die erfindungsgemäße Anordnung des Einspeisestutzens führt zu einem tangentialen Einströmen der Luft in den Ringspalt, wodurch eine gerichtete Ringströmung im Ringspalt erzeugt wird und die Strömungswiderstände nach dem Eintritt in den Ringspalt verringert werden.

Weiterhin sind bevorzugt wenigstens zwei Einspeisestutzen für Sekundärluft vorgesehen, die bezogen auf den Umfang des Ringspalts mit Abstand zueinander angeordnet sind. Diese Anordnung unterstützt die Ausbildung einer Ringströmung im Ringspalt, da an zwei oder mehreren Stellen mit Umfangsabstand zueinander die Luft im Wesentlichen tangential in den Ringspalt eintritt, was zu einer Kreisströmung (Ringströmung) führt. Da die Luftströmung auch eine axiale Komponente in Bezug auf die Achse des Ringspalts aufweist, entsteht letztlich eine etwa spiralförmige Strömung in dem Ringspalt, wodurch auch der Strömungsweg verlängert und somit die Verweilzeit der Luft im Ringspalt verlängert wird. Die Luftströmung im Ringspalt wird vergleichmäßigt und die unerwünschte Rückströmung des Prozessgases in den Ringspalt wird durch die erfindungsgemäße Lösung verhindert. Dadurch kann wiederum die Auskondensation des Prozessgases im Eintrittsbereich des Kühlers/Kondensators verhindert und die dadurch bedingte Korrosion vermieden werden.

Gemäß einer bevorzugten Weiterbildung der Erfindung sind wenigstens drei Einspeisestutzen, vorzugsweise wenigstens vier Einspeisestutzen für Sekundärluft vorgesehen, die bezogen auf den Umfang des Ringspalts jeweils mit Abstand zueinander angeordnet sind.

Besonders bevorzugt ist es gemäß der vorliegenden Erfindung so, dass zwei oder mehrere Einspeisestutzen für Sekundärluft über den Umfang verteilt jeweils mit etwa gleichem Umfangsabstand bezogen auf den Ringspalt angeordnet sind. Verwendet man beispielsweise vier Einspeisestutzen mit etwa gleichem Umfangsabstand, dann beträgt dieser Umfangsabstand zwischen je zwei Einspeisestutzen jeweils etwa 90 ° bezogen auf den Umfang. Die bei der tangentialen Einleitung über den ersten Einspeisestutzen erzeugte Ringströmung wird dann durch die an dem in Umfangsrichtung jeweils nächstliegenden Einspeisestutzen ebenfalls etwa tangential eingespeiste Luft unterstützt, da sie dort erneut eine Komponente in Umfangsrichtung erhält. Durch die Mehrzahl der über den Umfang verteilt angeordneten Einspeisestutzen wird so eine stabile Ringströmung aufgebaut.

Gemäß einer bevorzugten Variante der Erfindung ist der Durchmesser des Ringspalts geringer als der Durchmesser des wenigstens einen Einspeisestutzens. Ein Ziel der erfindungsgemäßen Lösung liegt darin, an jeder Stelle des Ringspalts (Ringraums) eine positive Austrittsgeschwindigkeit des eingespeisten Luftstroms zu gewährleisten. Deshalb sollte der Ringspalt möglichst klein gehalten werden. Die notwendige Spaltgröße hängt dabei ab vom Durchmesser des Eintrittsstutzens und von dem Volumen des zur Verfügung stehenden Luftstroms. Der Spaltdurchmesser lässt sich aufgrund dieser Parameter für jeden Kondensator jeweils separat berechnen.

Beispielsweise ist der Durchmesser des Ringspalts um wenigstens etwa 20 %, vorzugsweise um wenigstens etwa 40 %, besonders bevorzugt um wenigstens etwa 50 % geringer als der Durchmesser des wenigstens einen Einspeisestutzens.

Eine bevorzugte Weiterbildung der vorliegenden Erfindung sieht vor, dass der Durchmesser des Ringspalts nur einen Bruchteil des Radius des Gaseintrittsstutzens beträgt, wobei vorzugsweise der Durchmesser des Ringspalts höchstens etwa ein Viertel, besonders bevorzugt höchstens etwa ein Fünftel des Radius des Gaseintrittsstutzens beträgt.

Weiterhin ist es bevorzugt so, dass in dem Ringspalt zwischen der Hülse und dem Gaseintrittsstutzen wenigstens ein Abstandhalter angeordnet ist. Wenn man einen möglichst geringen Spaltdurchmesser anstrebt, kann dies zu fertigungstechnischen Schwierigkeiten führen, insbesondere da die Spaltgröße, d.h. der Abstand der Hülse zum Gaseintrittsstutzen möglichst überall gleichmäßig sein sollte. Diese Schwierigkeit lässt sich durch wenigstens einen, bevorzugt zwei oder mehrere Abstandhalter an geeigneten Stellen im Ringspalt zwischen Hülse und Gaseintrittsstutzen überwinden.

Dabei ist es vorteilhaft, wenn wenigstens ein Abstandhalter axial mit Abstand zu einem den Gaseintrittsstutzen umgebenden Kühlmantel des Kondensators in dem Ringspalt angeordnet ist, d.h. im Strömungsweg des Prozessgases gesehen oberhalb des Kühlmantels angeordnet ist. Auf diese Weise vermeidet man, dass durch den Abstandhalter eine Kältebrücke zu der Hülse entsteht, die zu unkontrollierter Kondensation in Höhe des Abstandhalters führen kann.

Gemäß einer bevorzugten Weiterbildung der Erfindung sind wenigstens zwei Abstandhalter in dem Ringspalt zwischen der Hülse und dem Gaseintrittsstutzen angeordnet, wobei die Abstandhalter über den Umfang des Ringspalts gesehen zueinander einen Abstand aufweisen. Hier kommt es auch auf die Art und Form der Abstandhalter an. Es ist auch beispielsweise denkbar, einen ringförmigen Abstandhalter zu verwenden, der sich über einen gewissen Umfangsbereich in dem Ringspalt erstreckt. In diesem Fall kann ein einzelner Abstandhalter ausreichend sein. Verwendet man kleinere Abstandhalter, die nur in einem definierten Bereich quasi punktuell einen Abstand gewährleisten, ist es zu empfehlen, zwei oder mehrere solcher Abstandhalter zu verwenden, um überall einen möglichst gleichmäßigen Ringspalt zu erhalten.

Bevorzugt sind dabei wenigstens zwei Abstandhalter in dem Ringspalt zwischen der Hülse und dem Gaseintrittsstutzen angeordnet, wobei diese Abstandhalter in axialer Richtung des Ringspalts gesehen zueinander einen Abstand aufweisen können. Für die Anzahl und Form der hier verwendeten Abstandhalter kommt es auch auf die Länge des Gaseintrittsstutzens, den Durchmesser des Ringspalts und auf die Festigkeit und Materialstärke der für den Gaseintrittsstutzen und die Hülse verwendeten Materialien an.

Gegenstand der vorliegenden Erfindung ist weiterhin ein Verfahren zur Verhinderung der Korrosion an einem Gaseintrittsstutzen für Prozessgas (NOₓ-Gas) im Übergangsbereich zum Inneren eines Kondensators einer Salpetersäureanlage, wobei der Gaseintrittsstutzen auf der Innenseite eine Hülse aufweist, durch die eine Gaseintrittsöffnung in Form eines Ringspalts ausgebildet wird, wobei der Ringspalt mit wenigstens einer Einspeiseöffnung und wenigstens einem in diese Einspeiseöffnung mündenden Einspeisestutzen für Sekundärluft versehen ist, so dass sich eine Mantelströmung aus Sekundärluft um das durch den Gaseintrittsstutzen eintretende Prozessgas bildet, bei dem man über die wenigstens eine Einspeiseöffnung und den wenigstens einen Einspeisestutzen die Sekundärluft tangential in den Ringspalt einspeist, sodass sich in dem Ringspalt eine Ringströmung bezogen auf die Achse des Gaseintrittsstutzens ausbildet.

Eine bevorzugte Weiterbildung der vorliegenden Erfindung sieht vor, dass über einen oder mehrere Einspeisestutzen die Sekundärluft in etwa tangential in den Ringspalt eingespeist und so eine stabile gerichtete Ringströmung erzeugt wird.

Gemäß einer bevorzugten Weiterbildung des erfindungsgemäßen Verfahrens wird über eine Ringströmung eine weitgehend gleichmäßige Austrittsgeschwindigkeit der Luft aus dem Ringspalt erzeugt. Dies verhindert die unerwünschte partielle Rückströmung des Prozessgases nach dem Durchströmen des Gaseintrittsstutzens zurück in den Ringspalt.

Vorzugsweise wird die Ringströmung im Ringspalt über wenigstens zwei Einspeisestutzen für Sekundärluft erzeugt, die bezogen auf den Umfang des Ringspalts mit Abstand zueinander angeordnet sind.

Besonders bevorzugt wird die Ringströmung im Ringspalt über wenigstens drei, vorzugsweise jeweils etwa tangential angeordnete, Einspeisestutzen, vorzugsweise wenigstens vier Einspeisestutzen für Sekundärluft erzeugt, die bezogen auf den Umfang des Ringspalts jeweils mit Abstand zueinander angeordnet sind.

Bevorzugt wird die Ringströmung im Ringspalt über zwei oder mehrere Einspeisestutzen für Sekundärluft erzeugt, die über den Umfang des Ringspalts verteilt jeweils mit etwa gleichem Umfangsabstand bezogen auf den Ringspalt angeordnet sind. Wenn dann die Strömungsgeschwindigkeit in Umfangsrichtung der über den ersten Einspeisestutzen in den Ringspalt eintretenden Luft nachlässt, wird die Ringströmung durch die über den zweiten Einspeisestutzen eintretende Luft wieder verstärkt.

In einer Variante der vorliegenden Erfindung ist der wenigstens eine Einspeisestutzen für Sekundärluft in einem von 90° abweichenden Winkel zur Achse des Ringspalts ausgerichtet, wobei der Winkel zwischen größer als 0° und kleiner als 90° liegt, insbesondere größer als oder gleich 5° und kleiner als oder gleich 85°; größer als oder gleich 10° und kleiner als oder gleich 80°; größer als oder gleich 15° und kleiner als oder gleich 75°; größer als oder gleich 20° und kleiner als oder gleich 70°; größer als oder gleich 25° und kleiner als oder gleich 65°; größer als oder gleich 30° und kleiner als oder gleich 60°; größer als oder gleich 35° und kleiner als oder gleich 55°. In einer Variante ist der Winkel größer als oder gleich 40° und kleiner als oder gleich 50°; oder größer als oder gleich 42° und kleiner als oder gleich 48°.

In einer Variante der vorliegenden Erfindung ist die Anzahl der Einspeiseöffnungen und Einspeisestutzen nicht besonders begrenzt, sondern eine beliebige Anzahl Einspeiseöffnungen und Einspeisestutzen können bereitgestellt werden. Die tatsächliche Anzahl der Einspeiseöffnungen und Einspeisestutzen wird lediglich begrenzt durch den physikalischen Raum, den jede von ihnen einnimmt und die notwendigen Ränder der Einspeiseöffnungen zwischeneinander. Es sollte zudem angemerkt werden, dass es möglich ist, die Einspeiseöffnungen nicht nur in einer radialen Ebene anzuordnen, sondern dass mehrere Schichten angeordnet werden können. Insbesondere kann die Anzahl der Einspeiseöffnungen 5, 6, 7, 8, 9, 10, 11, 12, 13, 14, 15, 16, 17, 18, 19, 20 sein, oder sogar mehr. Insbesondere sind diese gleichmäßig um den Ringspalt herum angeordnet, um eine möglichst gleichmäßige Ringströmung zu erreichen.

Nachfolgend wird die vorliegende Erfindung anhand von Ausführungsbeispielen unter Bezugnahme auf die Zeichnungen näher erläutert. Dabei zeigen:
Figur 1 einen schematisch vereinfachten Querschnitt durch eine erste beispielhafte erfindungsgemäße Einrichtung zur Verhinderung der Korrosion an einem Gaseintrittsstutzen;
Figur 2 einen schematisch vereinfachten Längsschnitt durch eine zweite beispielhafte erfindungsgemäße Einrichtung zur Verhinderung der Korrosion an einem Gaseintrittsstutzen.

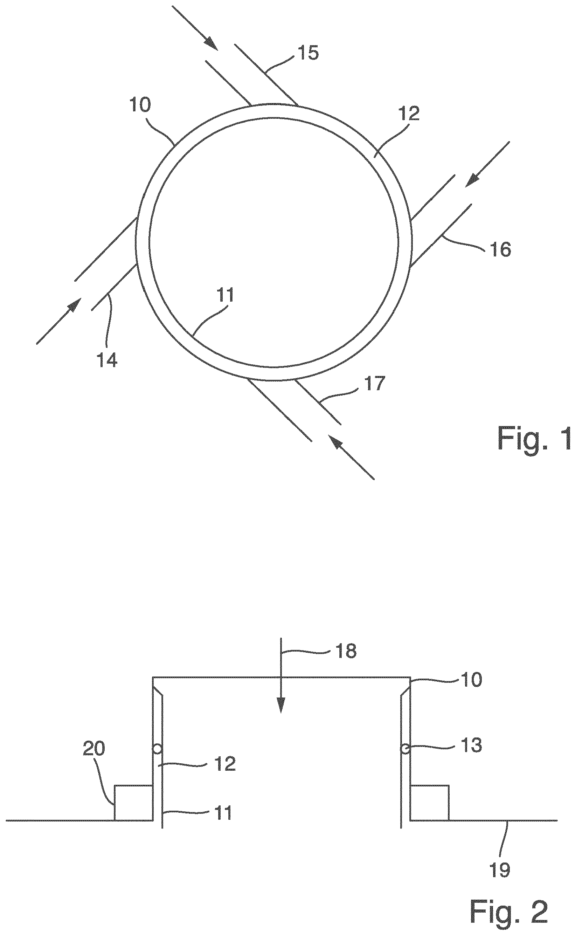

Zunächst wird nachfolgend unter Bezugnahme auf die Figur 1 ein erstes Ausführungsbeispiel der vorliegenden Erfindung näher erläutert. Die Darstellung zeigt einen schematisch stark vereinfachten Querschnitt durch eine erste beispielhafte erfindungsgemäße Einrichtung zur Verhinderung der Korrosion an einem Gaseintrittsstutzen 10. Es handelt sich bei diesem Gaseintrittsstutzen 10 beispielsweise um einen Stutzen, über den in einer Salpetersäureanlage das Prozessgas (NOx-Gas) im Übergangsbereich von einem Speisewasservorwärmer in das Innere eines Kondensators/Kühlers eintritt. Man erkennt, dass in den Gaseintrittsstutzen 10 koaxial mit Abstand eine Hülse 11 eingebracht ist, die beispielsweise in den Gaseintrittsstutzen eingeschweißt ist. Dadurch ist zwischen der Hülse 11, die koaxial innen liegt, und dem Gaseintrittsstutzen 10, der koaxial außen liegt, ein Ringspalt 12 gebildet. Radial außenseitig sind an dem Gaseintrittsstutzen 10 mehrere Einspeisestutzen 14, 15, 16, 17 angebracht, derart, dass sich ihre Achse jeweils in etwa oder annähernd tangential in Bezug auf die Achse des Gaseintrittsstutzens 10 erstreckt. Durch diese Einspeisestutzen 14, 15, 16, 17 strömt Sperrluft in Richtung der Pfeile gesehen, d.h. jeweils in etwa tangential in den Ringspalt 12 ein, so dass in diesem eine Ringströmung von Luft erzeugt wird. Im vorliegenden Ausführungsbeispiel handelt es sich um insgesamt vier solcher Einspeisestutzen 14, 15, 16, 17, die jeweils mit in etwa gleichem Abstand zueinander über den Umfang des Gaseintrittsstutzens 10 verteilt angeordnet sind, so dass die Luft über diese Einspeisestutzen an vier Stellen jeweils etwa tangential von außen in den Ringspalt 12 einströmt. Dies erzeugt in dem Ringspalt eine Ringströmung, die dann eine axiale Komponente erhält, so dass sich im Prinzip eine spiralförmige Strömung der Luft in dem Ringspalt ergibt. Es wird gemäß der Erfindung eine Ringströmung mit möglichst gleichmäßiger Strömungsgeschwindigkeit angestrebt, bei der eine Rückströmung des Prozessgases von der Unterseite des Gaseintrittsstutzens zurück in den Ringspalt 12 verhindert wird. Dabei ist es auch vorteilhaft, wenn man den Ringspalt 12 möglichst schmal ausbildet. Man erkennt in der Figur 1, dass der Durchmesser dieses Ringspalts 12 im Verhältnis zum Durchmesser des Gaseintrittsstutzens 10 bzw. zum Innendurchmesser der Hülse 11 wesentlich geringer ist. Beispielsweise beträgt der Durchmesser des Ringspalts 12 in der Ausführungsvariante von Figur 1 nur etwa ein Zehntel des inneren Radius der Hülse 11. Der Durchmesser des Ringspalts 12 ist auch geringer als der Durchmesser der vier Einspeisestutzen 14, 15, 16, 17 und beträgt in der Ausführungsvariante gemäß Figur 1 beispielsweise etwa die Hälfte des Durchmessers der Einspeisestutzen. Da über mehrere Einspeisestutzen Luft eingespeist wird und der Ringspalt 12 schmal ist, ist die Strömungsgeschwindigkeit im Ringspalt vergleichsweise hoch, wodurch ebenfalls die unerwünschte Rückströmung von Prozessgas verhindert wird.

Nachfolgend wird unter Bezugnahme auf Figur 2 ein weiteres erfindungsgemäßes Ausführungsbeispiel anhand einer Längsschnittansicht erläutert. Das Prozessgas aus der Salpetersäureproduktion tritt hier von oben her in Richtung des Pfeils 18 in axialer Richtung in den Gaseintrittsstutzen 10 ein und strömt an dessen unterem, nach unten hin offenen, Ende in den in der Zeichnung nur angedeuteten Kondensator, dessen äußerer Mantel mit 19 bezeichnet ist. Man erkennt hier, dass die Hülse 11 in den Gaseintrittsstutzen 10 eingeschweißt ist, indem sie beispielsweise am oberen Ende durch Schweißen mit der Innenseite des Gaseintrittsstutzens 10 verbunden ist, darunter aber derart nach innen hin abgewinkelt ist, dass sich die Hülse im Wesentlichen über die gesamte Länge des Gaseintrittsstutzens 10 in diesem innenseitig koaxial und mit Abstand zu diesem erstreckt. Durch diesen Abstand ist zwischen der innenseitigen Hülse 11 und dem außenseitigen Gaseintrittsstutzen 10 ein Ringspalt 12 gebildet. Um bei einem vergleichsweise engen Ringspalt 12 einen gleichmäßigen Spaltdurchmesser zu erhalten, kann man Abstandhalter 13 zwischen Hülse 11 und Gaseintrittsstutzen 10 einsetzen. In dem Beispiel gemäß Figur 2 sind dies zwei Abstandhalter 13, die am Umfang einander gegenüber liegen. Es können aber selbstverständlich auch mehr als zwei solcher Abstandhalter 13 vorhanden sein, die auch axial untereinander liegen können, oder untereinander und nebeneinander, oder es sind mehr als zwei Abstandhalter 13 über den Umfang verteilt vorhanden, um möglichst überall einen gleichbleibenden engen Ringspalt 12 zu erhalten. Wie man in Figur 2 sieht, ist hier im unteren Bereich des Gaseintrittsstutzens 10, der an den Kondensator 10 anschließt, ein den Gaseintrittsstutzen 10 außen ringsum umgebender Kühlmantel 20 vorgesehen, durch den ein Kühlmittel fließt. Um zu verhindern, dass sich durch die Abstandhalter 13 eine Kältebrücke von dem Kühlmantel 20 zu der Hülse 11 bildet, ist es wie in Figur 2 gezeigt wird vorteilhaft die Abstandhalter 13 mit Abstand oberhalb des Kühlmantels 20 zwischen Hülse 11 und Gaseintrittsstutzen 10 anzuordnen.

### Bezugszeichenliste

- 10: Gaseintrittsstutzen
- 11: Hülse
- 12: Ringspalt
- 13: Abstandhalter
- 14: Einspeisestutzen
- 15: Einspeisestutzen
- 16: Einspeisestutzen
- 17: Einspeisestutzen
- 18: Pfeil
- 19: Mantel des Kondensators
- 20: Kühlmantel

## Patentansprüche

1. Einrichtung zur Verhinderung der Korrosion an einem Gaseintrittsstutzen (10) für Prozessgas (NOx-Gas) im Übergangsbereich zum Inneren eines Kondensators einer Salpetersäureanlage, wobei der Gaseintrittsstutzen (10) auf der Innenseite eine Hülse (11) aufweist, durch die eine Gaseintrittsöffnung in Form eines Ringspalts (12) ausgebildet wird, wobei der Ringspalt (12) mit wenigstens einer Einspeiseöffnung und wenigstens einem in diese Einspeiseöffnung mündenden Einspeisestutzen (14, 15, 16, 17) für Sekundärluft versehen ist, so dass sich eine Mantelströmung aus Sekundärluft um das durch den Gaseintrittsstutzen (10) eintretende Prozessgas bildet, **dadurch gekennzeichnet, dass** der wenigstens eine Einspeisestutzen (14, 15, 16, 17) für Sekundärluft in einem von 90°C abweichenden Winkel zur Achse des Ringspalts ausgerichtet ist und der wenigstens eine Einspeisestutzen (14) tangential bezogen auf den Ringspalt (12) ausgerichtet ist.

2. Einrichtung nach Anspruch 1, **dadurch gekennzeichnet, dass** wenigstens zwei Einspeisestutzen (14, 15, 16, 17) für Sekundärluft vorgesehen sind, die bezogen auf den Umfang des Ringspalts (12) mit Abstand zueinander angeordnet sind, oder **dadurch gekennzeichnet, dass** wenigstens drei Einspeisestutzen (14, 15, 16, 17), vorzugsweise wenigstens vier Einspeisestutzen, für Sekundärluft vorgesehen sind, die bezogen auf den Umfang des Ringspalts (12) jeweils mit Abstand zueinander angeordnet sind.

3. Einrichtung nach Anspruch 2, **dadurch gekennzeichnet, dass** zwei oder mehrere Einspeisestutzen (14, 15, 16, 17) für Sekundärluft über den Umfang verteilt jeweils mit gleichem Umfangsabstand bezogen auf den Ringspalt (12) angeordnet sind.

4. Einrichtung nach einem der Ansprüche 1 bis 3, **dadurch gekennzeichnet, dass** der Durchmesser des Ringspalts (12) geringer ist als der Durchmesser des wenigstens einen Einspeisestutzens (14, 15, 16, 17).

5. Einrichtung nach Anspruch 4, **dadurch gekennzeichnet, dass** der Durchmesser des Ringspalts (12) um wenigstens 20 %, vorzugsweise um wenigstens 40 %, besonders bevorzugt um wenigstens 50 % geringer ist als der Durchmesser des wenigstens einen Einspeisestutzens (14, 15, 16, 17).

6. Einrichtung nach einem der Ansprüche 1 bis 5, **dadurch gekennzeichnet, dass** der Durchmesser des Ringspalts (12) nur einen Bruchteil des Radius des Gaseintrittsstutzens (10) beträgt, wobei vorzugsweise der Durchmesser des Ringspalts (12) höchstens ein Viertel, besonders bevorzugt höchstens ein Fünftel des Radius des Gaseintrittsstutzens (10) beträgt.

7. Einrichtung nach einem der Ansprüche 1 bis 6, **dadurch gekennzeichnet, dass** in dem Ringspalt (12) zwischen der Hülse (11) und dem Gaseintrittsstutzen (10) wenigstens ein Abstandhalter (13) angeordnet ist.

8. Einrichtung nach Anspruch 7, **dadurch gekennzeichnet, dass** wenigstens ein Abstandhalter (13) axial mit Abstand zu einem den Gaseintrittsstutzen (10) umgebenden Kühlmantel (20) des Kondensators in dem Ringspalt angeordnet ist.

9. Einrichtung nach Anspruch 7 oder 8, **dadurch gekennzeichnet, dass** wenigstens zwei Abstandhalter (13) in dem Ringspalt (12) zwischen der Hülse (11) und dem Gaseintrittsstutzen (10) angeordnet sind, wobei die Abstandhalter (13) über den Umfang des Ringspalts (12) gesehen zueinander einen Abstand aufweisen.

10. Einrichtung nach einem der Ansprüche 8 bis 9, **dadurch gekennzeichnet, dass** wenigstens zwei Abstandhalter (13) in dem Ringspalt (12) zwischen der Hülse (11) und dem Gaseintrittsstutzen (10) angeordnet sind, wobei die Abstandhalter (13) in axialer Richtung des Ringspalts (12) gesehen zueinander einen Abstand aufweisen.

11. Verfahren zur Verhinderung der Korrosion an einem Gaseintrittsstutzen für Prozessgas (NOx-Gas) im Übergangsbereich zum Inneren eines Kondensators einer Salpetersäureanlage, wobei der Gaseintrittsstutzen (10) auf der Innenseite eine Hülse (11) aufweist, durch die eine Gaseintrittsöffnung in Form eines Ringspalts (12) ausgebildet wird, wobei der Ringspalt (12) mit wenigstens einer Einspeiseöffnung und wenigstens einem in diese Einspeiseöffnung mündenden Einspeisestutzen (14, 15, 16, 17) für Sekundärluft versehen ist, so dass sich eine Mantelströmung aus Sekundärluft um das durch den Gaseintrittsstutzen (10) eintretende Prozessgas bildet, **dadurch gekennzeichnet, dass** man über die wenigstens eine Einspeiseöffnung und den wenigstens einen Einspeisestutzen (14, 15, 16, 17) die Sekundärluft tangential in den Ringspalt (12) einspeist, sodass sich in dem Ringspalt (12) eine Ringströmung bezogen auf die Achse des Gaseintrittsstutzens (10) ausbildet.

12. Verfahren nach Anspruch 11, **dadurch gekennzeichnet, dass** über mehrere Einspeisestutzen (14, 15, 16, 17) die Sekundärluft tangential in den Ringspalt (12) eingespeist wird.

13. Verfahren nach Anspruch 11 oder 12, **dadurch gekennzeichnet, dass** über eine Ringströmung eine weitgehend gleichmäßige Austrittsgeschwindigkeit der Luft aus dem Ringspalt (12) erzeugt wird.

14. Verfahren nach einem der Ansprüche 11 bis 13, **dadurch gekennzeichnet, dass** die Ringströmung im Ringspalt (12) über wenigstens zwei Einspeisestutzen (14, 15, 16, 17) für Sekundärluft erzeugt wird, die bezogen auf den Umfang des Ringspalts (12) mit Abstand zueinander angeordnet sind, oder **dadurch gekennzeichnet, dass** die Ringströmung im Ringspalt (12) über wenigstens drei Einspeisestutzen (14, 15, 16, 17), vorzugsweise wenigstens vier Einspeisestutzen, für Sekundärluft erzeugt wird, die bezogen auf den Umfang des Ringspalts (12) jeweils mit Abstand zueinander angeordnet sind.

15. Verfahren nach einem der Ansprüche 11 bis 14, **dadurch gekennzeichnet, dass** die Ringströmung im Ringspalt (12) über zwei oder mehrere Einspeisestutzen (14, 15, 16, 17) für Sekundärluft erzeugt wird, die über den Umfang des Ringspalts (12) verteilt jeweils mit gleichem Umfangsabstand bezogen auf den Ringspalt angeordnet sind.

## Claims

1. Device for preventing corrosion on a gas inlet stub (10) for process gas (NOx gas) in the crossover region to the interior of a condenser of a nitric acid plant, wherein the gas inlet stub (10) has on the inside a sleeve (11) by way of which a gas inlet opening in the form of an annular gap (12) is formed, wherein the annular gap (12) is provided with at least one feed opening and, opening out into this feed opening, at least one feed connection piece (14, 15, 16, 17) for secondary air such that a peripheral flow of secondary air forms around the process gas entering through the gas inlet stub (10), **characterized in that** the at least one feed connection piece (14, 15, 16, 17) for secondary air is oriented at an angle other than 90° with respect to the axis of the annular gap and the at least one feed connection piece (14) is oriented tangentially with respect to the annular gap (12).

2. Device according to Claim 1, **characterized in that** at least two feed connection pieces (14, 15, 16, 17) for secondary air are provided, which are arranged spaced apart from one another with respect to the circumference of the annular gap (12), or **characterized in that** at least three feed connection pieces (14, 15, 16, 17), preferably at least four feed connection pieces, for secondary air are provided, which are each arranged spaced apart from one another with respect to the circumference of the annular gap (12).

3. Device according to Claim 2, **characterized in that** two or more feed connection pieces (14, 15, 16, 17) for secondary air are arranged distributed over the circumference with in each case an equal circumferential spacing with respect to the annular gap (12).

4. Device according to one of Claims 1 to 3, **characterized in that** the diameter of the annular gap (12) is smaller than the diameter of the at least one feed connection piece (14, 15, 16, 17).

5. Device according to Claim 5, **characterized in that** the diameter of the annular gap (12) is smaller than the diameter of the at least one feed connection piece (14, 15, 16, 17) by at least 20%, preferably by at least 40%, particularly preferably by at least 50%.

6. Device according to one of Claims 1 to 5, **characterized in that** the diameter of the annular gap (12) is only a fraction of the radius of the gas inlet stub (10), wherein, preferably, the diameter of the annular gap (12) is at most one quarter, particularly preferably at most one fifth, of the radius of the gas inlet stub (10).

7. Device according to one of Claims 1 to 6, **characterized in that** at least one spacer (13) is arranged in the annular gap (12) between the sleeve (11) and the gas inlet stub (10).

8. Device according to Claim 7, **characterized in that** at least one spacer (13) is arranged in the annular gap with an axial spacing from a cooling jacket (20), surrounding the gas inlet stub (10), of the condenser.

9. Device according to Claim 7 or 8, **characterized in that** at least two spacers (13) are arranged in the annular gap (12) between the sleeve (11) and the gas inlet stub (10), wherein, seen over the circumference of the annular gap (12), the spacers (13) have a spacing from one another.

10. Device according to either of Claims 8 and 9, **characterized in that** at least two spacers (13) are arranged in the annular gap (12) between the sleeve (11) and the gas inlet stub (10), wherein, seen in the axial direction of the annular gap (12), the spacers (13) have a spacing from one another.

11. Method for preventing corrosion on a gas inlet stub for process gas (NOx gas) in the crossover region to the interior of a condenser of a nitric acid plant, wherein the gas inlet stub (10) has on the inside a sleeve (11) by way of which a gas inlet opening in the form of an annular gap (12) is formed, wherein the annular gap (12) is provided with at least one feed opening and, opening out into this feed opening, at least one feed connection piece (14, 15, 16, 17) for secondary air such that a peripheral flow of secondary air forms around the process gas entering through the gas inlet stub (10), **characterized in that** the secondary air is fed tangentially into the annular gap (12) via the at least one feed opening and the at least one feed connection piece (14, 15, 16, 17) such that an annular flow forms in the annular gap (12) with respect to the axis of the gas inlet stub (10).

12. Method according to Claim 11, **characterized in that** the secondary air is fed tangentially into the annular gap (12) via multiple feed connection pieces (14, 15, 16, 17) .

13. Method according to Claim 11 or 12, **characterized in that** a largely uniform exit speed of the air from the annular gap (12) is produced via an annular flow.

14. Method according to one of Claims 11 to 13, **characterized in that** the annular flow in the annular gap (12) is produced via at least two feed connection pieces (14, 15, 16, 17) for secondary air, which are arranged spaced apart from one another with respect to the circumference of the annular gap (12) or, **characterized in that** the annular flow in the annular gap (12) is produced via at least three feed connection pieces (14, 15, 16, 17), preferably at least four feed connection pieces, for secondary air, which are each arranged spaced apart from one another with respect to the circumference of the annular gap (12).

15. Method according to one of Claims 11 to 14, **characterized in that** the annular flow in the annular gap (12) is produced via two or more feed connection pieces (14, 15, 16, 17) for secondary air, which are arranged distributed over the circumference of the annular gap (12) with in each case an equal circumferential spacing with respect to the annular gap.

## Revendications

1. Dispositif destiné à empêcher la corrosion au niveau d'un raccord d'entrée de gaz (10) destiné au gaz de traitement (gaz NOx) dans la région de transition menant à l'intérieur d'un condenseur d'une installation à acide nitrique, le raccord d'entrée de gaz (10) comportant du côté intérieur un manchon (11) permettant de conférer à une ouverture d'entrée de gaz la forme d'un espace annulaire (12), l'espace annulaire (12) étant pourvu d'au moins une ouverture d'alimentation et d'au moins un raccord d'alimentation (14, 15, 16, 17) destiné à de l'air secondaire et débouchant dans cette ouverture d'alimentation de sorte qu'un écoulement d'enveloppe d'air secondaire se forme autour du gaz de traitement entrant par le raccord d'entrée de gaz (10), **caractérisé en ce que** l'au moins un raccord d'alimentation (14, 15, 16, 17) destiné à l'air secondaire est orienté suivant un angle différent de 90° par rapport à l'axe de l'espace annulaire, et l'au moins un raccord d'alimentation (14) est orienté tangentiellement à l'espace annulaire (12).

2. Dispositif selon la revendication 1, **caractérisé en ce que** au moins deux raccords d'alimentation (14, 15, 16, 17) sont prévus pour l'air secondaire, lesquels sont disposés à distance l'un de l'autre par rapport à la circonférence de l'espace annulaire (12), ou **caractérisé en ce qu'**au moins trois raccords d'alimentation (14, 15, 16, 17), de préférence au moins quatre raccords d'alimentation, sont prévus pour l'air secondaire, lesquels sont disposés chacun à distance les uns des autres par rapport à la circonférence de l'espace annulaire (12).

3. Dispositif selon la revendication 2, **caractérisé en ce qu'**au moins deux raccords d'alimentation (14, 15, 16, 17) destinés à l'air secondaire sont répartis sur la circonférence et sont disposés chacun à la même distance circonférentielle par rapport à l'espace annulaire (12).

4. Dispositif selon l'une des revendications 1 à 3, **caractérisé en ce que** le diamètre de l'espace annulaire (12) est inférieur au diamètre de l'au moins un raccord d'alimentation (14, 15, 16, 17).

5. Dispositif selon la revendication 4, **caractérisé en ce que** le diamètre de l'espace annulaire (12) est inférieur d'au moins 20 %, de préférence d'au moins 40 %, de manière particulièrement préférée d'au moins 50 %, au diamètre de l'au moins un raccord d'alimentation (14, 15, 16, 17).

6. Dispositif selon l'une des revendications 1 à 5, **caractérisé en ce que** le diamètre de l'espace annulaire (12) n'est qu'une fraction du rayon du raccord d'entrée de gaz (10), de préférence le diamètre de l'espace annulaire (12) représentant au plus un quart, de manière particulièrement préférée au plus un cinquième du rayon du raccord d'entrée de gaz (10).

7. Dispositif selon l'une des revendications 1 à 6, **caractérisé en ce qu'**au moins un élément d'espacement (13) est disposé dans l'espace annulaire (12) entre le manchon (11) et le raccord d'entrée de gaz (10).

8. Dispositif selon la revendication 7, **caractérisé en ce qu'**au moins un élément d'espacement (13) est disposé dans l'espace annulaire axialement à distance d'une enveloppe de refroidissement (20), entourant le raccord d'entrée de gaz (10), du condenseur.

9. Dispositif selon la revendication 7 ou 8, **caractérisé en ce qu'**au moins deux éléments d'espacement (13) sont disposés dans l'espace annulaire (12) entre le manchon (11) et le raccord d'entrée de gaz (10), les éléments d'espacement (13) étant espacés les uns des autres sur la circonférence de l'espace annulaire (12).

10. Dispositif selon l'une des revendications 8 à 9, **caractérisé en ce qu'**au moins deux éléments d'espacement (13) sont disposés dans l'espace annulaire (12) entre le manchon (11) et le raccord d'entrée de gaz (10), les éléments d'espacement (13) étant espacés les uns des autres dans la direction axiale de l'espace annulaire (12).

11. Procédé destiné à empêcher la corrosion au niveau d'un raccord d'entrée de gaz destiné à un gaz de traitement (gaz NOx) dans la région de transition menant à l'intérieur d'un condenseur d'une installation à acide nitrique, le raccord d'entrée de gaz (10) comportant du côté intérieur un manchon (11) permettant de conférer à une ouverture d'entrée de gaz la forme d'un espace annulaire (12), l'espace annulaire (12) étant pourvu d'au moins une ouverture d'alimentation et d'au moins un raccord d'alimentation (14, 15, 16, 17) destiné à de l'air secondaire et débouchant dans cette ouverture d'alimentation de sorte qu'un écoulement d'enveloppe d'air secondaire se forme autour du gaz de traitement entrant par le raccord d'entrée de gaz (10), **caractérisé en ce que** l'air secondaire est introduit tangentiellement dans l'espace annulaire (12) par l'au moins une ouverture d'alimentation et l'au moins un raccord d'alimentation (14, 15, 16, 17) de sorte que l'espace annulaire (12) forme un écoulement annulaire par rapport à l'axe du raccord d'entrée de gaz (10).

12. Procédé selon la revendication 11, **caractérisé en ce que** l'air secondaire est introduit tangentiellement dans l'espace annulaire (12) par une pluralité de raccord d'alimentation (14, 15, 16, 17).

13. Procédé selon la revendication 11 ou 12, **caractérisé en ce qu'**une vitesse de sortie dans une large mesure uniforme de l'air sortant de l'espace annulaire (12) est générée par un écoulement annulaire.

14. Procédé selon l'une quelconque des revendications 11 à 13, **caractérisé en ce que** l'écoulement annulaire dans l'espace annulaire (12) est généré par au moins deux raccords d'alimentation (14, 15, 16, 17) destinés à l'air secondaire, lesquels sont disposés à distance les uns des autres sur la circonférence de l'espace annulaire (12), ou **caractérisé en ce que** l'écoulement annulaire dans l'espace annulaire (12) est généré par au moins trois raccords d'alimentation (14, 15, 16, 17), de préférence au moins quatre raccords d'alimentation, destinés à l'air secondaire, lesquels sont chacun disposés à distance les uns des autres sur la circonférence de l'espace annulaire (12).

15. Procédé selon l'une quelconque des revendications 11 à 14, **caractérisé en ce que** l'écoulement annulaire dans l'espace annulaire (12) est généré par au moins deux raccords d'alimentation (14, 15, 16, 17) destinés à l'air secondaire, lesquels sont répartis sur la circonférence de l'espace annulaire (12) et sont disposés à la même distance circonférentielle par rapport à l'espace annulaire.
